# EUROPEAN PATENT SPECIFICATION

(11) **EP 3 836 745 B1**
(45) Date of publication and mention of the grant of the patent: **20.12.2023**
(21) Application number: 18929637.9
(22) Date of filing: 09.08.2018
(51) Int. Cl.: H04W 64/00, H04W 76/12, H04W 36/00, H04W 76/30, H04W 92/04, H04W 36/12

(54) **COMMUNICATION SYSTEM AND COMMUNICATION CONTROL METHOD**
KOMMUNIKATIONSSYSTEM UND KOMMUNIKATIONSSTEUERUNGSVERFAHREN
SYSTÈME DE COMMUNICATION ET PROCÉDÉ DE COMMANDE DE COMMUNICATION

(43) Date of publication of application: 16.06.2021
(73) Proprietor: NTT DOCOMO, INC., Chiyoda-ku Tokyo 100-6150 (JP)
(72) Inventor: KATSUMATA Yuki, Tokyo 100-6150 (JP); MINOKUCHI Atsushi, Tokyo 100-6150 (JP); SAMA Malla Reddy, 80687 Munich (DE); THAKOLSRI Srisakul, 80687 Munich (DE); GUERZONI Riccardo, 80687 Munich (DE)
(74) Representative: Hoffmann Eitle
(86) International application number: PCT/JP2018/029911
(87) International publication number: WO 2020/031326

(56) References cited:
- EP-A1- 3 490 333
- EP-A1- 3 599 785
- EP-A1- 3 627 862
- WO-A1-2019/136128
- HUAWEI ET AL: "TS 23.502: Clarification on area of interest the AMF provided to the RAN", 3GPP DRAFT; S2-175851_TS23.502_CLARIFICATION ON AREA OF INTEREST THE AMF PROVIDED TO THE RAN, 3RD GENERATION PARTNERSHIP PROJECT (3GPP), MOBILE COMPETENCE CENTRE ; 650, ROUTE DES LUCIOLES ; F-06921 SO , vol. SA WG2, no. Sophia Antipolis, France; 20170821 - 20170825 21 August 2017 (2017-08-21), XP051325697, Retrieved from the Internet: URL:http://www.3gpp.org/ftp/Meetings_3GPP_ SYNC/SA2/Docs/ [retrieved on 2017-08-21]
- HUAWEI et al.: "TS 23. 502: Clarification on area of interesi the AMF provided to the RAN", 3GPP TSG SA WG2 #122BIS S 2-175851, 15 August 2017 (2017-08-15), XP051325697,
- SAMSUNG et al.: "Clarification on LADN", LG Electronics, 3GPP TSG SA WG2 #128 S 2-187532, 6 July 2018 (2018-07-06), XP051469461,
- SONY et al.: "LADN Signaling to SMF,", 3GPP TSG SA WG2 #126 S 2-181848, 2 March 2018 (2018-03-02), XP051408422,

## Description

### Technical Field

The present invention relates to a communication system and a communication control method.

### Background Art

Non Patent Literature 1 discloses a PDU session establishment procedure, a handover control procedure, and the like in 5G (5th Generation, 5th generation mobile communication system) network system (5GS). In 5GS, a LADN (Local Area Data Network) which is a DN (Data Network) to which only UE (User Equipment) located in a specific service area can be connected is defined.

### Citation List

### Non Patent Literature

Non Patent Literature 1: 3GPP TS 23.501

WO 2019/136 128 A1 describes a network entity, such as a user equipment (UE), that may request that a network provide multicast and broadcast services, e.g., where the request includes entity preferences such as network slice selection information. The network may provide information regarding provision of such services, where the information may include, for example, whether a service will be provided via a user plane or a control plane connection, network slice information, additional connections to be formed, separate encryption for such connections, etc. A Multicast/Broadcast Network Function (MBNF) may be used to establish such connections and manage a broadcast and multicast sessions. The MBNF may, for example, manage groups of entities, check an entity's access privileges for services, communicate with a Management and Network Orchestration (MANO) system to reserve resources, and send data to entities over a shared control plane connection.

EP 3 599 785 A1 describes a method for managing session. The method may be performed by a session management function, SMF, node and comprise: generating a packet data unit, PDU, session for a user equipment, UE; receiving, from an access and mobility management function, AMF, node, information about the UE; and determining, based on the information, whether to transmit an indication for notifying a user plane function, UPF, node to discard a downlink data for the PDU session of the UE. The determination may be dependent on whether the PDU session corresponds to a first service provided to the UE.

EP 3 627 862 A1 describes a method for reporting location information of a user equipment (UE) to a network node apparatus by the UE in a wireless communication system may comprise the steps of: receiving information indicating a service area where a data service is provided on the basis of a local area; receiving location change reporting configuration information of a session of the data service; and when the UE enters or leaves the service area while the session of the data service has been established, reporting information on a location change of the UE on the basis of the location change reporting configuration information.

EP 3 490 333 A1 describes a a 5G or pre-5G communication system for supporting a data transmission rate higher than that of a 4G communication system such as LTE. According to an embodiment of the present invention, a method of a terminal in a wireless mobile communication system comprises the steps of: receiving data network information including data network access permission region information and data network identification information; checking whether the terminal enters a data network access permission region, on the basis of the data network information; and performing a data network access procedure on the basis of the checking result.

HUAWEI et al. "TS 23.502: Clarification on area of interest the AMF provided to the RAN", 3GPP DRAFT; S2-175851_TS23.502_CLARIFICATION ON AREA OF INTEREST THE AMF PROVIDED TO THE RAN, 3RD GENERATION PARTNERSHIP PROJECT (3GPP), MOBILE COMPETENCE CENTRE ; 650, ROUTE DES LUCIOLES ; F-06921 SO,vol. SA WG2, no. Sophia Antipolis, France; 20170821 - 20170825 21 August 2017 (2017-08-21), XP051325697,Retrieved from the Internet:URL:http://www.3gpp.org/ftp/Meetings_3GPP_SYNC/SA2/Docs/ describes clarification on area of interest the AMF provided to the RAN.

### Summary of Invention

### Technical Problem

In the standard technique disclosed in Non Patent Literature 1, the service area of the LADN is set in units of tracking areas. The tracking area is an area including a coverage area of one or a plurality of base stations (Radio Access Networks (RANs)). That is, the standard technique disclosed in Non Patent Literature 1 has a problem that the service provision range of the LADN cannot be defined in units of areas (for example, in units of RANs, in units of cells, or the like) smaller than the tracking area.

In order to solve the above problem, an object of an aspect of the present invention is to provide a communication system and a communication control method capable of more flexibly defining the service provision range of a LADN.

### Solution to Problem

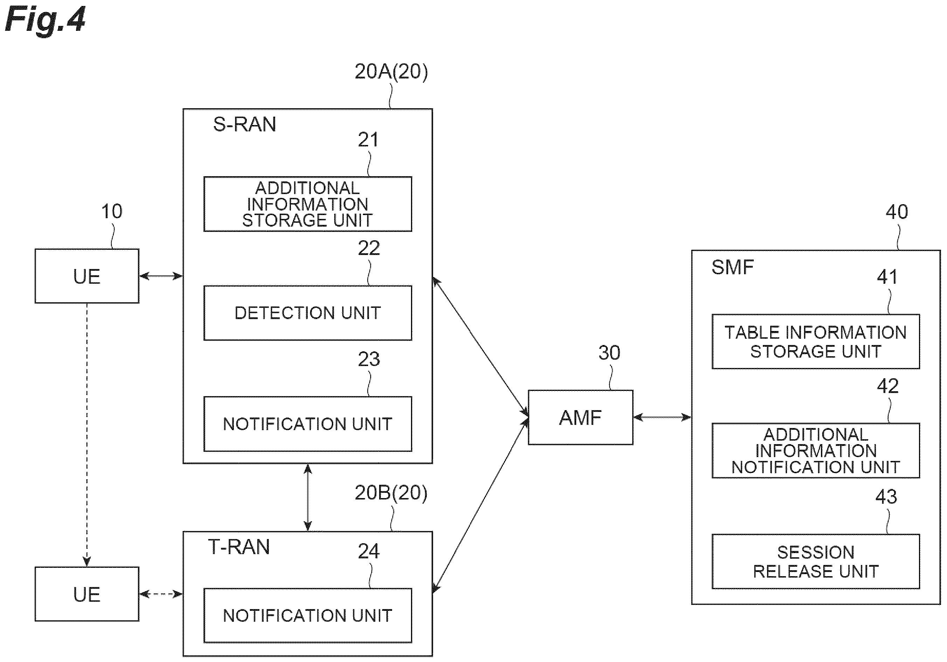

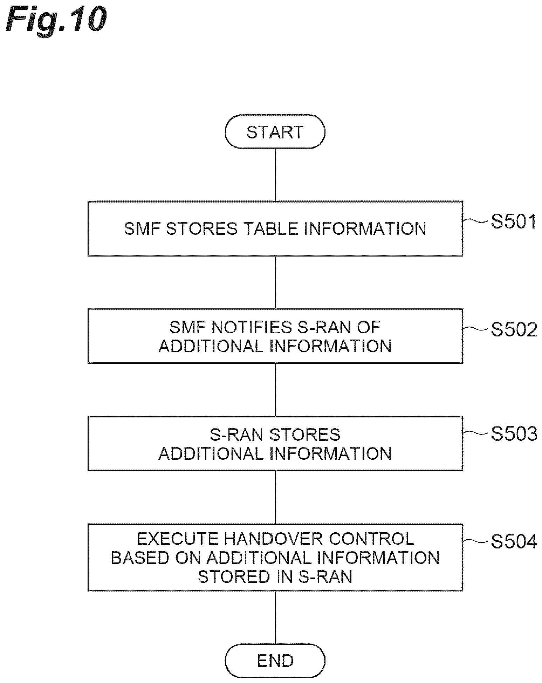

The above problem is solved by the subject matter of the independent claims. Optional features of the invention are carried out according to the dependent claims. The invention is carried out in the figures 4,10 and in the related text of the following description. The remaining of the description and the remaining of the figures are not according to the claimed invention and are presented for illustration purposes only The invention is disclosed in the figures and the related text. A communication system according to an aspect of an example includes: a base station node configured to be connected to a terminal by radio communication; and a session control node configured to perform session control of the terminal. The session control node includes: a table information storage unit configured to store table information in which a specific area included in a communication area of the base station node and a local area data network (LADN) whose service provision range is the specific area are associated with each other; and an additional information notification unit configured to notify, in a case of receiving a session establishment request to the LADN associated with the specific area in the table information from the terminal located in the specific area, a first base station node connected to the terminal of additional information indicating that the specific area is the service provision range of the LADN. The first base station node includes an additional information storage unit configured to store the additional information given in notification from the additional information notification unit.

In the above communication system, the session control node stores table information in which a LADN and a specific area which is a service provision range of the LADN are associated with each other. With this configuration, in a case of receiving a session establishment request to the LADN associated with the specific area stored in the table information from a terminal located in the specific area, the session control node can notify the first base station node connected to the terminal of the additional information. In addition, according to such additional information, the first base station node can grasp the fact that the requested session is a session between the terminal located in the specific area and the LADN whose service provision range is the specific area. As a result, the first base station node can make the session valid only within the specific area by performing appropriate control (for example, control upon handover) for the session. Therefore, according to the above communication system, the service provision range of the LADN can be more flexibly defined.

### Advantageous Effects of Invention

According to an aspect of the present invention, the service provision range of the LADN can be defined more flexibly.

### Brief Description of Drawings

FIG. 1 is a diagram illustrating a system configuration of a communication system according to an embodiment.
FIG. 2 is a diagram schematically illustrating configurations of TAs and RANs.
FIG. 3 is a diagram schematically illustrating an example of a LADN providing services in units of cells.
FIG. 4 is a block diagram illustrating functional configurations of a S-RAN, a T-RAN, and a SMF in FIG. 1.
FIG. 5 is a diagram illustrating an example of table information.
FIG. 6 is a sequence diagram illustrating a processing procedure of a communication system upon establishment of a session between UE and a LADN.
FIG. 7 is a sequence diagram illustrating a first example of a handover procedure in a case where the LADN provides services in units of RANs.
FIG. 8 is a sequence diagram illustrating a second example of a handover procedure in the case where the LADN provides services in units of RANs.
FIG. 9 is a sequence diagram illustrating an example of a handover procedure in a case where the LADN provides services in units of cells.
FIG. 10 is a flowchart illustrating operation of the communication system.
FIG. 11 is a diagram illustrating a hardware configuration of each of the RAN and a SMF.

### Description of Embodiments

An embodiment of the present invention will be described with reference to the accompanying drawings. Wherever possible, identical parts are denoted by identical reference signs, and overlapping descriptions are omitted.

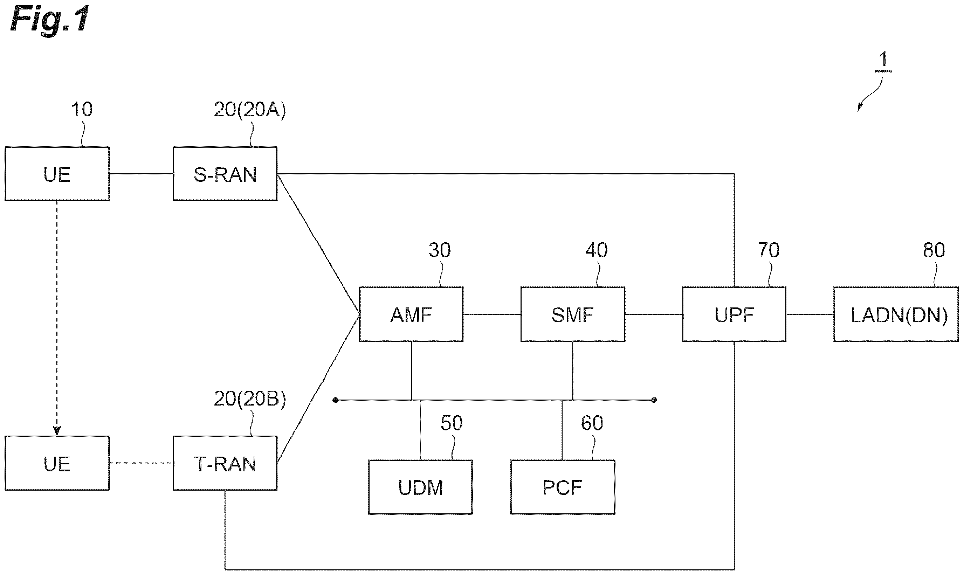

FIG. 1 is a diagram illustrating a system configuration of a communication system according to the present embodiment. As illustrated in FIG. 1, a communication system 1 includes LTE (User Equipment) 10 (terminal), a RAN (Radio Access Network) 20 (base station node), an AMF (Access and Mobility Management Function) 30, a SMF (Session Management Function) 40 (session control node), UDM (Unified Data Management) 50, a PCF (Policy Control Function) 60, a UPF (User Plane Function) 70, and a LADN (Local Area Data Network) 80.

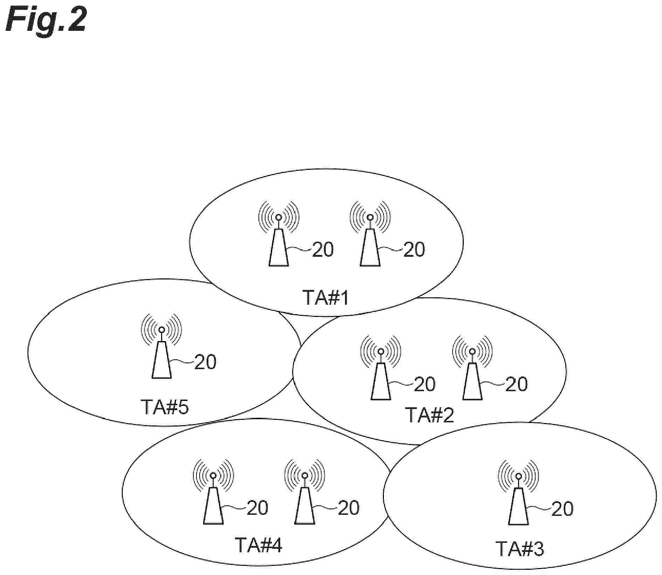

The LADN 80 is a DN (Data Network) to which only UE 10 located in a specific service area can connect. In a conventional communication system, it is necessary to determine the service area (service provision range) of a LADN in units of tracking areas. That is, for example, as illustrated in FIG. 2, in a case where there are a plurality of (here, five) tracking areas (TA#1 to TA#5), there is a problem that even though the LADN to which only UE 10 located in TA#1 or TA#5 can connect, the LADN to which only UE 10 located in TA#2 can connect, and the like can be defined, the LADN to which only UE 10 located in the communication area (coverage area) of one specific RAN 20 can connect cannot be defined. The tracking area is an area including a communication area of one or a plurality of RANs 20.

In contrast, the communication system 1 has a configuration capable of defining the service area of the LADN 80 in units of areas smaller than the tracking areas (that is, in units of RANs or in units of cells). By defining the service area of the LADN 80 in units of areas smaller than the tracking areas, it is possible to provide a service in a flexible form as follows, for example.

By setting the service area of the LADN 80 in units of RANs (that is, the communication area of a specific RAN 20), for example, it is possible to provide users with a service limited to the inside of a stadium where a sporting event or the like is performed (that is, within the communication area of one RAN 20 corresponding to the inside of the stadium).

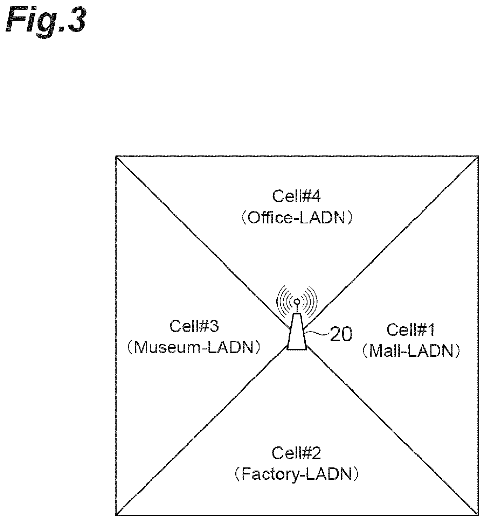

By setting the service area of the LADN 80 in units of cells (that is, an area corresponding to a part of a plurality of cells accommodated in a specific RAN 20), it is possible to provide a more flexible service. FIG. 3 illustrates an example where a service limited to each cell is provided for each cell in a case where a plurality of (four in this case) cells (Cell#1 to Cell#4) are accommodated in one RAN 20. The coverage area of Cell#1 is the area where a mall exists, the coverage area of Cell#2 is the area where a factory exists, the coverage area of Cell#3 is the area where a museum exists, and the coverage area of Cell#4 is the area where an office exists. Only UE 10 located in Cell#1 can connect to a LADN (Mall-LADN) that provides a service for users who visited the mall. Similarly, only UE 10 located in Cell#2, Cell#3, and Cell#4 can be connected to Factory-LADN providing a service for the factory, Museum-LADN providing a service for the museum, and Office-LADN providing a service for the office, respectively.

Hereinafter, the configuration that the communication system 1 includes for defining the service area of the LADN 80 in units of RANs or in units of cells will be described in detail.

The RAN 20 is a base station node connected to the UE 10 by radio communication. The RAN 20 may include a wireless network based on various communication schemes such as a mobile communication network according to the 3GPP standards including an eNodeB corresponding to a base station and a wireless network not conforming to the 3GPP standards (for example, Wi-Fi). In the present embodiment, the RAN 20 constituting the network of the communication area (first communication area) of movement origin of the UE 10 to be focused on is referred to as an S-RAN 20A (first base station node) and the RAN 20 constituting the network of the communication area (second communication area) of the movement destination of the UE 10 is referred to as a T-RAN 20B (second base station node).

The AMF 30 is a node having functions of access management, mobility management, and the like of the UE 10. The AMF 30 performs communication control for causing the UE 10 to communicate with the communication connection destination via a core network. The SMF 40 is a node (session control node) that performs session control of the UE 10. The SMF 40 has a function of managing a U-Plane session of the UE 10. The UDM 50 is a node having a function of managing information (subscriber information) of a user of the UE 10. The PCF 60 is a node that controls the communication policy. The UPF 70 is a node having a function of forwarding user data. The UPF 70 has a function of processing U-Plane traffic of the UE 10.

The LADN 80 is a data network whose service area is a specific area. The specific area is, for example, the entire communication area of the S-RAN 20A (that is, an area in units of RANs) or the area corresponding to a part of a plurality of cells accommodated in the S-RAN 20A (that is, an area in units of cells).

FIG. 4 is a block diagram illustrating functional configurations of the RAN 20 and the SMF 40. As illustrated in FIG. 4, the RAN 20 can communicate with the SMF 40 via the AMF 30. The RAN 20 includes, as functions of the S-RAN 20A, an additional information storage unit 21, a detection unit 22, and a notification unit 23. In addition, the RAN 20 includes a notification unit 24 as a function of the T-RAN 20B. The SMF 40 includes a table information storage unit 41, an additional information notification unit 42, and a session release unit 43.

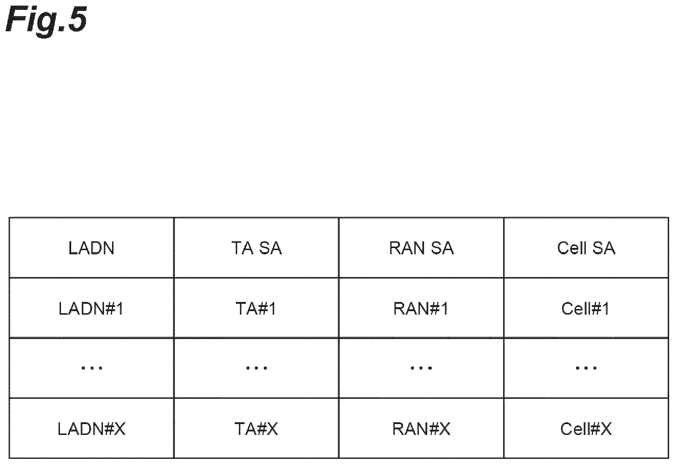

First, the SMF 40 will be described. The table information storage unit 41 stores table information in which a LADN and the service area of the LADN are associated with each other. FIG. 5 is a diagram illustrating an example of table information. In the example of FIG. 5, "LADN#n", "TA#n", "RAN#n", and "Cell#n" are identification information of a specific LADN, a specific tracking area, a specific RAN, and a specific cell (a specific cell accommodated in the specific RAN), respectively. The record in the first row of the table information illustrated in FIG. 5 indicates that the cell specified by "Cell#1" is accommodated in the RAN specified by "RAN#1" and the RAN is included in the tracking area specified by "TA#1". In addition, the record indicates that the service area of the LADN specified by "LADN#1" is equal to the area corresponding to the cell specified by "Cell#1". In this example, the service area of the LADN specified by "LADN#1" is an area defined in units of cells (here, the area corresponding to one specific cell).

In contrast, a record corresponding to a LADN whose service area is an area defined in units of RANs (communication area of a specific RAN) may not include cell identification information. Alternatively, the record may include identification information of each of a plurality of cells accommodated in the specific RAN. In addition, a record corresponding to a LADN whose service area is an area defined in units of tracking areas (specific one or a plurality of tracking areas) similarly to a conventional service area may not include RAN identification information. Alternatively, the record may include identification information of each of a plurality of RANs included in the specific one or plurality of tracking areas. In any case, the table information stores information for specifying the service area of each LADN (here, the area in units of one of tracking areas, RANs, and cells).

In the present embodiment, the table information storage unit 41 includes at least information of the LADN whose service provision range is a specific area (area in units of RANs or area in units of cells) included in the communication area of a RAN. That is, the table information storage unit 41 stores table information in which a specific area (the communication area of a specific RAN 20 or the area corresponding to a specific cell accommodated in the specific RAN 20) included in the communication area of the specific RAN 20, and a LADN 80 whose service provision range is the specific area.

In a case where the additional information notification unit 42 receives a session establishment request to the LADN 80 associated with a specific area in the table information from UE 10 located in the specific area, the additional information notification unit 42 notifies the RAN 20 (here, the S-RAN 20) connected to the UE 10 of additional information indicating that the specific area is the service provision range of the LADN 80 (hereinafter also referred to as a "service area of the LADN 80").

In a case where the service area of the LADN 80 is equal to the communication area of the S-RAN 20, the additional information notification unit 42 gives additional information indicating that the service area where the UE 10 is located (that is, the communication area of the S-RAN 20) is the service area of the LADN 80.

In a case where the service area of the LADN 80 is equal to the area corresponding to a part (in the present embodiment, one specific cell as an example) of the plurality of cells accommodated in the S-RAN 20, the additional information notification unit 42 gives additional information indicating that the service area where the UE 10 is located (that is, the area corresponding to the specific one cell accommodated in the S-RAN 20) is the service area of the LADN 80.

In the present embodiment, a plurality of sessions can be established from the UE 10 via the S-RAN 20. Therefore, additional information given in notification from the additional information notification unit 42 to the S-RAN 20 includes a session ID (session identification information) for identifying the session between the UE 10 and the LADN 80. As a result, when each process (for example, a process upon handover) after session establishment is performed, the S-RAN 20 specifies a session ("LADN PDU session" to be described later) between the UE 10 and the LADN 80 based on the session ID added to the additional information and can execute a special processing procedure to be described later for the session.

In response to receiving notification information (first notification information, third notification information, or fourth notification information to be described later) from the S-RAN 20A or the T-RAN 20B, the session release unit 43 releases the session between the UE 10 and the LADN 80.

Next, the S-RAN 20A will be described. The additional information storage unit 21 stores the additional information given in notification from the SMF 40 (additional information notification unit 42). That is, the additional information storage unit 21 stores a session ID for identifying a session between UE 10 and a LADN 80 and information indicating that the service area where the UE 10 is located is the service area of the LADN 80. In addition, the additional information storage unit 21 stores additional information distinguishably for each pieces of UE 10. That is, in the additional information storage unit 21, each piece of additional information is stored such that it can be found that a session of which piece of UE 10 each piece of information is on.

The detection unit 22 detects that the UE 10 related to the additional information stored in the additional information storage unit 21 has moved outside the service area of the LADN 80. In a case where the service area of the LADN 80 is equal to the communication area of the S-RAN 20A, the detection unit 22 detects that the UE 10 moves from the communication area of the S-RAN 20A to the communication area of another RAN 20 (here, the T-RAN 20B). In contrast, in a case where the service area of the LADN 80 is equal to an area corresponding to a part (in this example, a specific cell) of the plurality of cells accommodated in the S-RAN 20A, the detection unit 22 detects that the UE 10 has moved from the specific cell to another cell.

In a case where the detection unit 22 detects movement of the UE 10 (movement to the outside of the service area of the LADN 80), the notification unit 23 notifies the SMF 40 or the T-RAN 20B of predetermined notification information (first notification information, second notification information, or fourth notification Information). The content and the notification destination of the notification information can be determined based on the service area of the LADN 80 and the handover processing method and the like. Details of processes of the notification unit 23 will be described later.

Next, the T-RAN 20B will be described. In response to reception of the second notification information from the S-RAN 20A (the notification unit 23), the notification unit 24 rejects a session between the UE 10 and the LADN 80, and notifies the SMF 40 of third notification information indicating rejection of the session between the UE 10 and the LADN 80.

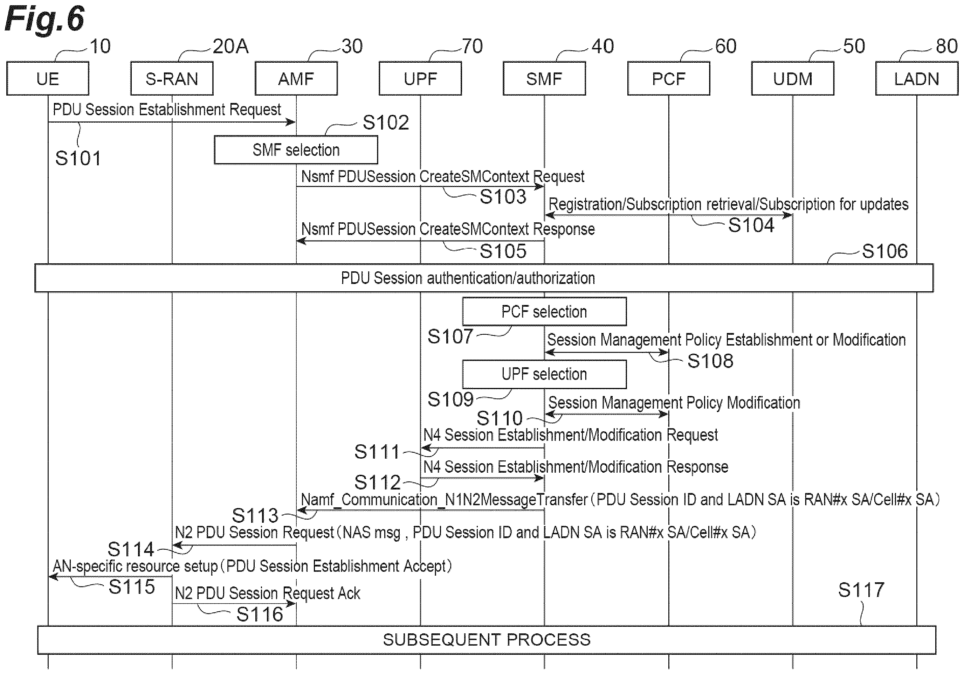

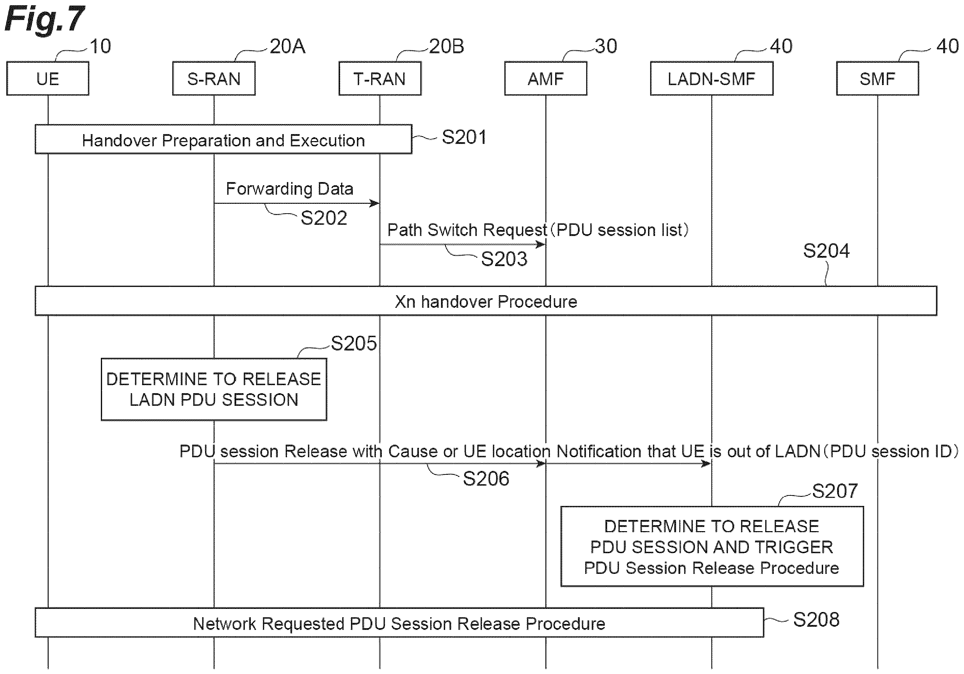

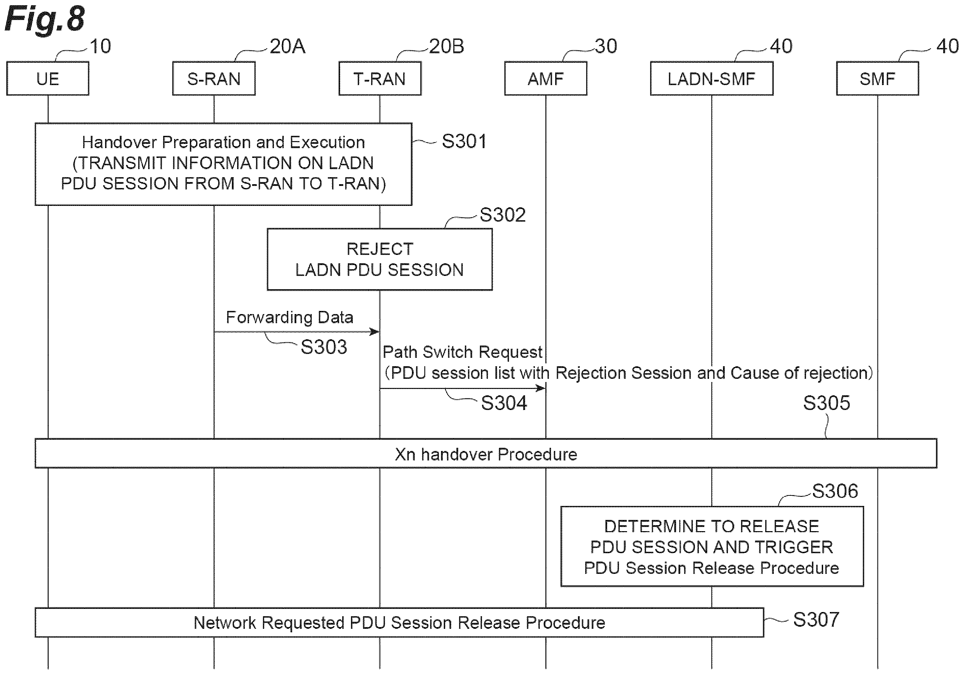

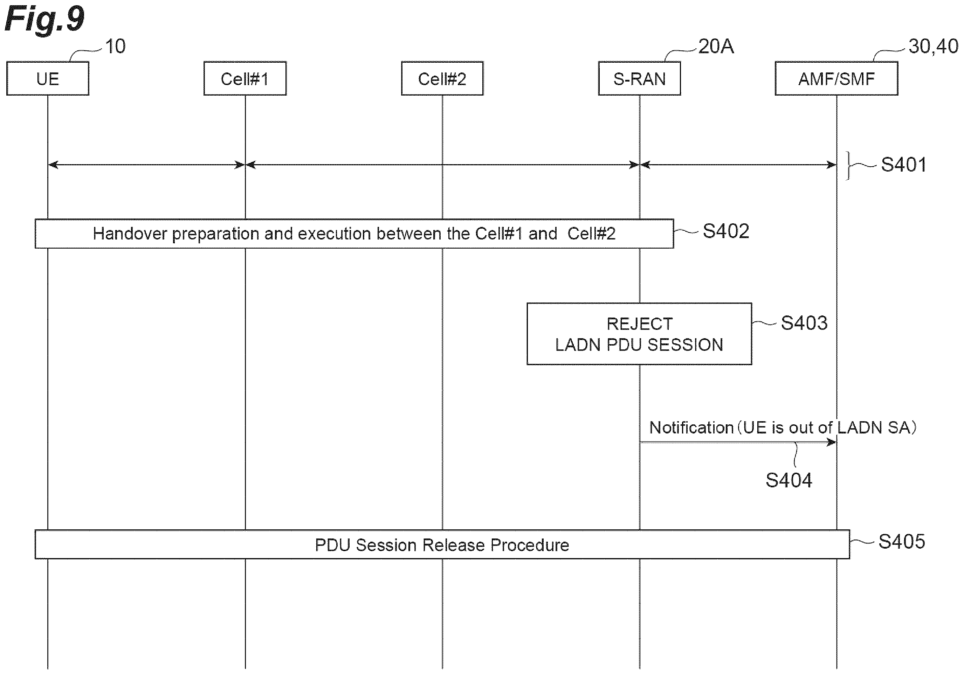

Hereinafter, processing procedures (including a communication control method of the present embodiment) executed by the communication system 1 will be described below with reference to FIGS. 6 to 9. FIG. 6 is a sequence diagram illustrating a processing procedure (session establishment procedure) of the communication system 1 upon establishment of a session between the UE 10 and the LADN 80. FIG. 7 is a sequence diagram illustrating a first example of a handover procedure in a case where the LADN 80 provides services in units of RANs (in a case where the service area of the LADN 80 is equal to the communication area of the S-RAN 20A). FIG. 8 is a sequence diagram illustrating a second example of the handover procedure in a case where the LADN 80 provides services in units of RANs. FIG 9 is a sequence diagram illustrating an example of the handover procedure in a case where the LADN 80 provides services in units of cells (in a case where the service area of the LADN 80 is equal to the area corresponding to a specific cell accommodated in the S-RAN 20A).

### [Session Establishment Procedure]

First, with reference to FIG 6, a procedure for establishing a session (PDU session) between the UE 10 connected to the S-RAN 20A and the LADN 80 will be described. The procedure of S113 and S114 in the procedure illustrated in FIG. 6 is a procedure for defining the service area of the LADN 80 in units of RANs or cells. The rest of the procedure (S101 to S112 and S115 to S117) is similar to a well-known PDU session establishment procedure.

First, a session establishment request (PDU Session Establishment Request) is transmitted from the UE 10 to the AMF 30 via the S-RAN 20A (S101). The session establishment request includes information such as a session ID (PDU Session ID) for identifying a session and a DNN (Data Network Name) for identifying the LADN 80 which is the connection destination.

Subsequently, the AMF 30 selects an appropriate SMF 40 to be associated with a session (PDU Session) (S102). For example, in a case where a communication network provided by the communication system 1 is configured of a slice which is a virtual network logically constructed on a network infrastructure, the SMF 40 associated with the session may be selected depending on the slice to which the UE 10 is connected. Specifically, the SMF 40 associated with the session can be selected based on identification information for specifying a slice such as NSSAI that can be included in the session establishment request.

Subsequently, the AMF 30 transmits Nsmf PDUSession CreateSMContext Request to the SMF 40 (S103). The SMF 40 executes the process of "Registration/Subscription retrieval/Subscription for updates" with the UDM 50 (S104). As a result, the SMF 40 acquires the subscriber information of the user of the UE 10. Then, the SMF 40 transmits Nsmf PDUSession CreateSMContext Response to the AMF 30 (S105). Subsequently, a predetermined user authentication process (PDU Session authentication/authorization) prior to PDU session establishment is executed (S106).

Subsequently, an appropriate PCF 60 is selected by a predetermined method (S107), and a predetermined process (Session Management Policy Establishment or Modification) regarding policy control is executed with the selected PCF 60 (S108). Subsequently, an appropriate UPF 70 is selected by a predetermined method (S109), and a predetermined process (Session Management Policy Modification) regarding policy control is executed between the SMF 40 and the PCF 60 (S110). Subsequently, the SMF 40 transmits N4 Session Establishment/Modification Request to the UPF 70 selected in S109 (S111), and receives a response (N4 Session Establishment/Modification Response) from the selected UPF 70 (S112).

Subsequently, the SMF 40 transmits a message (Namf_Communication_N1N2MessageTransfer) to the AMF 30 (S113). Here, the following processes are executed by the SMF 40.

That is, the additional information notification unit 42 refers to table information (see FIG. 5) stored in the table information storage unit 41, and thus grasps the fact that the session establishment request to the LADN 80 associated with the service area of the S-RAN 20A in the table information is received from the UE 10 located in the service area of the S-RAN 20A. Note that the information of the service area where the UE 10 is located (the communication area of the S-RAN 20A or the area corresponding to a specific cell accommodated in the S-RAN 20A) can be given in notification to the SMF 40 in the course of executing processes of S101 to S112, for example.

Then, the additional information notification unit 42 adds the additional information described above to a message (Namf_Communication_N1N2MessageTransfer) and transmits the above message to the AMF 30. In a case where the service area (LADN SA) of the LADN 80 is equal to the communication area (RAN#x SA) of the S-RAN 20A, the additional information is information (LADN SA is RAN#x SA) indicating that the service area where the UE 10 is located (that is, the communication area of the S-RAN 20A) is the service area of the LADN 80. In contrast, in a case where the service area (LADN SA) of the LADN 80 is equal to the area (Cell#x SA) corresponding to the specific cell accommodated in the S-RAN 20A, the additional information is information (LADN SA is Cell#x SA) indicating that the service area where the UE 10 is located (that is, the area corresponding to the specific cell) is the service area of the LADN 80. The additional information includes the session ID (PDU Session ID acquired in S101) for identifying a session (hereinafter also referred to as "LADN PDU session") between the UE 10 and the LADN 80. That is, the additional information is information indicating that the session (LADN PDU session) specified by the session ID is the session connected to the LADN 80 and that the service area where the current UE 10 is located is equal to the service area of the LADN 80.

Subsequently, the AMF 30 transmits a session establishment request (N2 PDU Session Request) including the additional information received from the SMF 40 to the S-RAN 20 (S114). Due to the processes of S113 and S114, additional information is given in notification from the SMF 40 (additional information notification unit 42) to the S-RAN 20 via the AMF 30. In addition, according to the process of S114, the session (LADN PDU session) is established between the S-RAN 20A and the UE 10 (S115). Further, the S-RAN 20 transmits N2 PDU Session Request Ack to the AMF 30, and therefore the processes corresponding to the session establishment request are completed (S116). Thereafter, a predetermined process including the first uplink data transmission from the UE 10 is executed (S 117), and data communication between the UE 10 and the LADN 80 is realized via the LADN PDU session.

### [Handover in Units of RANs]

Next, a handover procedure at a time when the service area of the LADN 80 is the communication area of the S-RAN 20A and the UE 10 between which and the LADN 80 the LADN PDU session has been established is moved from the communication area of the S-RAN 20A to the communication area of T-RAN 20B will be described with reference to FIGS. 7 and 8. A first example illustrated in FIG 7 illustrates a processing example in which the S-RAN 20A gives an instruction to release the LADN PDU session. A second example illustrated in FIG. 8 illustrates a processing example in which the T-RAN 20B gives an instruction to release the LADN PDU session. Note that in FIGS. 7 and 8, "LADN-SMF" is a SMF 40 through which the LADN PDU session passes among a plurality of SMFs, and "SMF" is a SMF 40 through which a session other than the LADN PDU session passes.

### (First Example)

In the procedure illustrated in FIG. 7, the procedure of S205 to S207 is the procedure necessary for setting the service area of the LADN 80 in units of RANs (that is, the procedure necessary for making the service of the LADN 80 available only within the communication area of the S-RAN 20A). The rest of the procedure (S201 to S204 and S208) is similar to a known handover procedure.

First, when UE 10 connected to the S-RAN 20A moves from the communication area of the S-RAN 20A to the communication area of the T-RAN 20B, the detection unit 22 of the S-RAN 20A detects movement of the UE 10. Specifically, the detection unit 22 detects that the UE 10 related to additional information stored in the additional information storage unit 21 has moved from the communication area of the S-RAN 20A to the communication area of the T-RAN 20B. As a result, a predetermined handover process (Handover Preparation and Execution) is executed among the UE 10, the S-RAN 20A, and the T-RAN 20B (S201). Subsequently, information on one or a plurality of sessions established between the UE 10 and the S-RAN 20A is forwarded to the T-RAN 20B (S202), and Path Switch Request requesting switching of a relay transmission path is transmitted from the T-RAN 20B to the AMF 30 (S203). Path Switch Request includes a list of sessions requiring switching of the relay transmission path (that is, the session associated with the UE 10 relaying the S-RAN 20A). Thereafter, a predetermined handover procedure (Xn handover procedure) is executed among the UE 10, the S-RAN 20A, the T-RAN 20B, the AMF 30, and the SMF 40 (S204).

Subsequently, the S-RAN 20A determines to release the LADN PDU session (that is, the session specified by the session ID included in the additional information) in response to the fact that the detection unit 22 detects movement of the UE 10 (UE related to the additional information stored in the additional information storage unit 21) from the communication area of the S-RAN 20A to the communication area of the T-RAN 20B (S205). Subsequently, the notification unit 23 of the S-RAN 20A notifies the SMF 40 (LADN-SMF) of the first notification information (PDU session Release with Cause or UE location Notification that UE is out of LADN) giving an instruction to release the LADN PDU session (S206). Here, as an example, the first notification information includes a session ID for specifying the LADN PDF session to be released and information indicating the reason for session release (movement of the UE 10 to the outside of the service area of the LADN 80). In addition, the first notification information is transmitted from the S-RAN 20A to the SMF 40 via the AMF 30.

Subsequently, in response to reception of the first notification information, the session release unit 43 of the SMF 40 determines to release the LADN PDF session and triggers a predetermined session release procedure (S207). As a result, the predetermined session release procedure (Network Requested PDU Session Release Procedure) is executed and the LADN PDF session is released (S208).

### (Second Example)

In the procedure illustrated in FIG. 8, the procedure of S301, S302, S304, and S306 is the procedure necessary for setting the service area of the LADN 80 in units of RANs (a new procedure or a procedure obtained by modifying part of a known procedure). The rest of the procedure (S303, S305, and S307) is similar to the known handover procedure.

First, similarly to the first example, when UE 10 connected to the S-RAN 20A moves from the communication area of the S-RAN 20A to the communication area of the T-RAN 20B, the detection unit 22 of the S-RAN 20A detects movement of the UE 10. As a result, a predetermined handover process (Handover Preparation and Execution) is executed among the UE 10, the S-RAN 20A, and the T-RAN 20B (S301). In S301, the notification unit 23 of the S-RAN 20A transmits information on the LADN PDU session in response to the fact that the detection unit 22 detects the movement of the UE 10. The above information includes the second notification information indicating that the LADN PDU session is available only in the communication area of the S-RAN 20A.

In response to reception of the second notification information, the notification unit 24 of the T-RAN 20B rejects the LADN PDU session (S302) and notifies the SMF 40 (LADN-SMF) of the third notification information indicating rejection of the LADN PDU session (S304). Note that prior to S304, similarly to the first example, information on one or more sessions established between the UE 10 and the S-RAN 20A is forwarded from the S-RAN 20A to the T-RAN 20B (S303).

Here, as an example, the third notification information is included in Path Switch Request requesting switching of the relay transmission path from the T-RAN 20B to the AMF 30 in S304. Thereafter, the third notification information is given in notification from the AMF 30 to the SMF 40 (LADN-SMF). As a result, the third notification information is given in notification from the S-RAN 20A to the SMF 40 via the AMF 30. The third notification information includes a session ID for specifying the LADN PDF session to be rejected and information indicating the reason for rejection (movement of the UE 10 to the outside of the service area of the LADN 80). Thereafter, a predetermined handover procedure (Xn handover procedure) is executed among the UE 10, the S-RAN 20A, the T-RAN 20B, the AMF 30, and the SMF 40 (S305).

Subsequently, in response to reception of the third notification information, the session release unit 43 of the SMF 40 determines to release the LADN PDF session and triggers a predetermined session release procedure (S306). As a result, the predetermined session release procedure (Network Requested PDU Session Release Procedure) is executed and the LADN PDF session is released (S307).

In each of the first example and the second example described above, when the UE 10 moves from the communication area of the S-RAN 20A to the communication area of the T-RAN 20B, the LADN PDU session from among a plurality of sessions associated with the UE 10 is appropriately released. As a result, it is possible to limit the service area of the LADN 80 to the area in units of RANs (here, the communication area of the S-RAN 20A). Note that according to the first example, the LADN PDU session can be released by causing the S-RAN 20A, which is the handover source, to determine to release LADN PDU session. In contrast, according to the second example, the LADN PDU session can be released by causing the T-RAN 20B, which is the handover destination, to determine to release LADN PDU session. In any case, upon establishment of the LADN PDU session, since the additional information is given in notification from the SMF 40 to the S-RAN 20A, the S-RAN 20A can execute an appropriate process (process for releasing the LADN PDU session).

### [Handover in Units of Cells]

Next, a handover procedure at a time when the service area of the LADN 80 is a specific cell (here "Cell#1") accommodated in the S-RAN 20A and the UE 10 between which and the LADN 80 the LADN PDU session has been established is moved to an area corresponding to another cell (here "Cell#2") accommodated in the S-RAN 20A will be described with reference to FIG. 9. In the procedure illustrated in FIG. 9, the procedure of S403 to S405 is the procedure necessary for setting the service area of the LADN 80 in units of cells (that is, the procedure necessary for making the service of the LADN 80 available only within the area corresponding to Cell#1). The rest of the procedure (S401 and S402) is similar to the known handover procedure.

First, the UE 10 is located in the area corresponding to Cell#1 and performs data communication with the LADN 80 via a base station (base station subsystem) corresponding to Cell#1 (S401). Subsequently, when the UE 10 moves from the area corresponding to Cell#1 to the area corresponding to Cell#2, the detection unit 22 of the S-RAN 20A detects movement of the UE 10. Specifically, the detection unit 22 detects that the UE 10 related to additional information stored in the additional information storage unit 21 has moved from Cell#1 which is the service area of the LADN 80 to another cell (Cell#2). As a result, a predetermined handover process (Handover preparation and execution) is executed between the UE 10 and the S-RAN 20A (including the base station subsystem corresponding to Cell#1 and the base station subsystem corresponding to Cell#2) (S402).

Subsequently, the notification unit 23 of the S-RAN 20A rejects a LADN PDU session in response to the fact that the detection unit 22 detects movement of the UE 10 (LTE related to the additional information stored in the additional information storage unit 21) from Cell#1 to Cell#2 (S403). Then, the notification unit 23 notifies the SMF 40 (SMF relaying the LADN PDU session) of the fourth notification information giving an instruction to release the LADN PDU session (S404). For example, the fourth notification information may include parameter information indicating the fact that the UE 10 has moved out of the service area of the LADN 80 (UE is out of LADN SA), a movement destination area of the UE 10 (here, Cell#2), and the like.

Subsequently, in response to reception of the fourth notification information, the session release unit 43 of the SMF 40 triggers a predetermined session release procedure (PDU Session Release Procedure) and thus releases the LADN PDF session (S405).

According to the procedure described above, when the UE 10 moves from the Cell#1 to the Cell#2, the LADN PDU session among a plurality of sessions associated with the UE 10 is appropriately released. As a result, it is possible to limit the service provision range of the LADN 80 to the area in units of cells (here, the area corresponding to the specific cell (Cell#1) accommodated in the S-RAN 20A).

Note that the process (S403) of rejecting the LADN PDU session in the S-RAN 20A is not indispensable, however, according to the above process, service provision of the LADN 80 to UE 10 that has moved to the outside of the service area (Cell#1) of the LADN 80 can be immediately stopped.

In contrast, in a case of omitting the process of S403, it is possible to allow the SMF 40 to determine the timing of disabling a LADN PDU session (timing of releasing the LADN PDU session). As a result, for example, in a case where the service area of the LADN 80 can dynamically change (for example, in a case where table information stored in the table information storage unit 41 can dynamically change), the SMF 40 can perform appropriate session control based on latest table information. For example, a case will be considered where the service area of the LADN 80 is set only to Cell#1 in the table information upon LADN PDU session establishment, and when UE 20 moves to Cell#2, the service area of the LADN 80 includes Cell#2 in the table information. In such a case, the SMF 40 does not need to release the LADN PDU session. Rather, it is appropriate for the SMF 40 to normally hand over the LADN PDU session from Cell#1 to Cell#2 in a manner identical to that of other sessions associated with the UE 10. Therefore, after reception of the fourth notification information in S404, the SMF 40 (session release unit 43) may refer to the table information again and may judge again whether the movement destination (here, Cell#2) of the UE 10 is included in the service area of the LADN 80. Then, in a case where it is judged that the movement destination of the UE 10 is included in the service area of the LADN 80 according to the re-judgment, the SMF 40 may hand over the LADN PDU session from Cell#1 to Cell#2 without releasing the LADN PDU session (that is, without triggering the process of S405).

Next, with reference to FIG. 10, an example of the communication control method executed by the communication system of the present embodiment will be described.

First, the table information storage unit 41 of the SMF 40 stores the table information described above (see FIG. 5) (S501). The table information storage unit 41 may be a single device (for example, a common database device) common to the plurality of SMFs 40 or may be a device individually provided for each of the plurality of SMFs 40. In the latter case, table information stored in each of the plurality of table information storage units 41 is synchronized, for example, periodically with each other.

Subsequently, as described with reference to FIG. 6 (in particular, S112 and S113), in a case of receiving a session establishment request to a LADN 80 associated with a specific area (in the present embodiment, the communication area of the S-RAN 20A or an area corresponding to a specific cell (Cell#1)) in the table information from the UE 10 located in the specific area, the SMF 40 (additional information notification unit 42) notifies the S-RAN 20 to which the UE 10 is connected of additional information indicating that the specific area in which the UE 10 is located is the service area of the LADN 80 (S502).

Subsequently, the S-RAN 20 (additional information storage unit 21) stores the additional information given in notification from the SMF 40 (S503). Thereafter, when the UE 10 moves outside the service area of the LADN 80, handover control based on the additional information stored in the S-RAN 20 is executed (S504). That is, the processing procedure (see FIGS. 7 to 9) for appropriately releasing the LADN PDU session is executed.

Next, operation and effect of the communication system of the present embodiment will be described. In the communication system 1 configured as in the present embodiment (specifically, a node group including the RAN 20 and the SMF 40), the SMF 40 (table information storage unit 41) stores table information in which a LADN 80 and the service area (specific area) of the LADN 80 are associated with each other. Here, the specific area is the communication area of a specific RAN 20 or an area corresponding to a specific one or plurality of cells accommodated in the specific RAN 20. With this configuration, in a case of receiving a session establishment request from UE 10 located in a specific area stored in the table information to the LADN 80 associated with the specific area (that is, the LADN 80 whose service area is the specific area), the SMF 40 can notify the S-RAN 20A connected to the UE 10 of additional information. In addition, according to such additional information, the S-RAN 20A can grasp the fact that this session is a session between the UE 10 located in the specific area and the LADN 80 whose service area is the specific area. As a result, the S-RAN 20 can make this session valid only within the specific area by performing appropriate control (for example, handover control described above) for this session. Therefore, according to the communication system 1, the service provision range of the LADN 80 can be defined more flexibly. Specifically, it is possible to set the service provision range of the LADN 80 to the communication area of a specific RAN 20 (here, the S-RAN 20) or the area corresponding to a specific one or a plurality of cells accommodated in the S-RAN 20.

In addition, the additional information includes a session ID for identifying a session (LADN PDU session) between UE 10 and a LADN 80. With this configuration, in a case where a plurality of sessions are associated with one piece of LTE 10, it is possible to specify a session (for example, a LADN PDU session) requiring special control, and to perform appropriate control for the specified session (specifically, a process such as session release upon handover described above). That is, while executing the handover process as illustrated in FIGS. 7 to 9 for the LADN PDU session, it is possible to execute a normal handover procedure for other sessions.

Note that the block diagrams used in the description of the above embodiment illustrates blocks in units of functions. These functional blocks (components) are realized by any combination of at least one of hardware and software. In addition, the method of realizing each functional block is not particularly limited. That is, each functional block may be realized by using one physically or logically coupled device, or may be realized by directly or indirectly (for example, using a cable, radio, or the like) connecting two or more devices physically or logically separated and using the plurality of devices. The functional block may be realized by combining software with the above one device or the plurality of above devices.

The functions include determining, determining, judging, calculating, computing, processing, deriving, investigating, looking up, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, assigning, and the like. However, the functions are not limited to them.

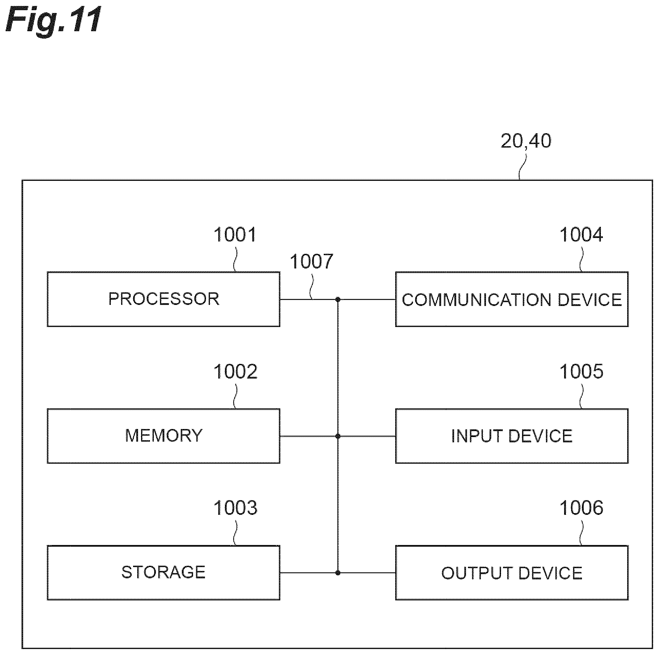

For example, each of the RAN 20, the SMF 40, and the like according to an embodiment of the present disclosure may function as a computer that performs processes of a radio communication method of the present disclosure. FIG. 11 is a diagram illustrating an example of a hardware configuration of each of the RAN 20 and the SMF 40 according to an embodiment of the present disclosure. Each of the RAN 20 and the SMF 40 described above may be physically configured as a computer device including a processor 1001, a memory 1002, a storage 1003, a communication device 1004, an input device 1005, an output device 1006, a bus 1007, and the like.

Note that in the following description, the expression "device" can be replaced with a circuit, device, unit, or the like. The hardware configuration of each of the RAN 20 and the SMF 40 may be configured to include one or a plurality of the respective devices illustrated in FIG. 11, or may be configured without including some of the devices.

Each function of each the RAN 20 and the SMF 40 is realized by causing predetermined software (program) to be loaded into hardware such as the processor 1001 and the memory 1002 so that the processor 1001 performs computation and controls communication performed by the communication device 1004 or controls at least one of reading and writing of data from and to the memory 1002 and the storage 1003.

The processor 1001 operates, for example, an operating system to control the entire computer. The processor 1001 may be configured of a central processing unit (CPU) including an interface with a peripheral device, a control device, a computing device, a register, and the like.

In addition, the processor 1001 causes a program (program code), a software module, data, and the like to be loaded from at least one of the storage 1003 and the communication device 1004 into the memory 1002, and executes various processes according to them. As the program, a program causing the computer to execute at least some of the operations described in the embodiment described above is used. For example, the additional information notification unit 42 of the SMF 40 may be realized by a control program that is stored in the memory 1002 and operates in the processor 1001. Other functional blocks may be similarly realized. Even though it has been described that various processes described above are executed by one processor 1001, the various processes may be executed simultaneously or sequentially by two or more processors 1001. The processor 1001 may be implemented as one or more chips. Note that the program may be transmitted from a network through a telecommunications line.

The memory 1002 is a computer-readable recording medium and may be configured of at least one of a ROM (Read Only Memory), an EPROM (Erasable Programmable ROM), an EEPROM (Electrically Erasable Programmable ROM), a RAM (Random Access Memory), and the like, for example. The memory 1002 may be referred to as a register, a cache, a main memory (main storage device), or the like. The memory 1002 can store a program (program code), a software module, and the like which can be executed for performing the radio communication method according to an embodiment of the present disclosure.

The storage 1003 is a computer-readable recording medium and may be configured of at least one of an optical disk such as a CD-ROM (Compact Disc ROM), a hard disk drive, a flexible disk, a magnetooptical disk (for example, a compact disk, a digital versatile disk, a Bluray (registered trademark) disk), a smart card, a flash memory (for example, a card, a stick, a key drive), a floppy (registered trademark) disk, a magnetic strip, and the like, for example. The storage 1003 may be referred to as an auxiliary storage device. The storage medium described above may be an appropriate medium such as a database, a server, or the like including at least one of the memory 1002 and the storage 1003.

The communication device 1004 is hardware (transmission and reception device) for performing communication between computers through at least one of a wired network and a wireless network, and is also referred to as a network device, a network controller, a network card, a communication module, or the like, for example. The communication device 1004 may be configured to include, for example, a high-frequency switch, a duplexer, a filter, a frequency synthesizer, and the like in order to realize at least one of frequency division duplex (FDD) and time division duplex (TDD).

The input device 1005 is an input device (for example, a keyboard, a mouse, a microphone, a switch, a button, a sensor, or the like) that receives an input from the outside. The output device 1006 is an output device (for example, a display, a speaker, a LED lamp, or the like) that performs output to the outside. Note that a configuration may be possible in which the input device 1005 and the output device 1006 are integrated (for example, a touch panel).

In addition, the respective devices such as the processor 1001 and the memory 1002 are connected by the bus 1007 for communicating information. The bus 1007 may be configured by using a single bus or may be configured by using different buses between respective devices.

In addition, each of the RAN 20 and the SMF 40 may be configured to include hardware such as a microprocessor, a digital signal processor (DSP), an ASIC (Application Specific Integrated Circuit), a PLD (Programmable Logic Device), a FPGA (Field Programmable Gate Array) or the like, and some or all of the functional blocks may be realized by the hardware. For example, the processor 1001 may be implemented by using at least one of the above examples of the hardware.

Although the present embodiment is described in detail in the foregoing, it is apparent to those skilled in the art that the present embodiment is not limited to the embodiment described in the present Description. The present embodiment can be implemented as a modified and changed aspect without deviating from the scope of the present invention defined by the Claims. Accordingly, what is described in the present Description is given by way of illustration and does not have any restrictive meaning to the present embodiment.

Information notification is not limited to the aspect/embodiment described in the present disclosure, and may be performed by using another method. For example, information notification may be performed by physical layer signaling (for example, DCI (Downlink Control Information), UCI (Uplink Control Information)), upper layer signaling (for example, RRC (Radio Resource Control) signaling, MAC (Medium Access Control) signaling), notification information (MIB (Master Information Block), SIB (System Information Block))), other signals, or a combination thereof. In addition, the RRC signaling may be referred to as a RRC message, and may be, for example, a RRC Connection Setup message, a RRC Connection Reconfiguration message, or the like.

Each aspect/embodiment described in the present disclosure can be applied to at least one of LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), a system using another appropriate system, and a next-generation system extended according to them. In addition, a plurality of systems may be combined and applied (for example, a combination of at least one of LTE and LTE-A and 5G, or the like).

As long as there is no inconsistency, the order in which the processing procedure, the sequence, the flowcharts, or the like is performed in each aspect/embodiment described in the present disclosure may be changed. For example, regarding the method described in the present disclosure, elements of various steps are presented by using an exemplary order and is not limited to the specific order presented.

The specific operation that is performed by the base station in the present disclosure may be performed by an upper node in some cases. In a network configured of one or more network nodes having a base station, it is apparent that various operations performed for communication with a terminal can be performed by at least one of the base station and another network node (for example, MME, S-GW, or the like is possible but not limited to them) other than the base station. A case where there is one network node other than the base station has been described above as an example; however, there may be a combination of a plurality of other network nodes (for example, MME and S-GW).

Information or the like can be output from an upper layer (or a lower layer) to the lower layer (or the upper layer). Information or the like may be input and output via a plurality of network nodes.

Information or the like that has been input or output may be stored in a specific place (for example, the memory), or may be managed by using a management table. Information or the like to be input or output can be overwritten, updated, or added. Information or the like that has been output may be deleted. Information or the like that has been input may be transmitted to another device.

Judging may be performed by using a value (0 or 1) represented by 1 bit, may be performed by using a Boolean value (true or false), or may be performed by using numerical comparison (for example, comparison with a predetermined value).

Each aspect/embodiment described in the present disclosure may be used alone or in combination, or may be used by being switched over in accordance with execution. In addition, notification of predetermined information (for example, notification of "being X") is not limited to being made explicitly, and may be made implicitly (for example, notification of the predetermined information is not made).

Software should be interpreted widely so as to mean an instruction, an instruction set, a code, a code segment, a program code, a program, a sub-program, a software module, an application, a software application, a software package, a routine, a sub-routine, an object, an executable file, a thread of execution, a procedure, a function, and the like regardless of whether software may be referred to as software, firmware, middleware, microcode, hardware description language or referred to as another name.

In addition, software, an instruction, information, and the like may be transmitted and received via a transmission medium. For example, in a case where software is transmitted from a website, a server, or another remote source by using at least one of a wired technology (a coaxial cable, a fiber optic cable, a twisted-pair wire, a digital subscriber line (DSL), or the like) and wireless technology (infrared rays, microwaves, or the like), at least one of these wired and wireless technologies is included within the definition of the transmission medium.

Information, signals, and the like described in the present disclosure may be represented by using any of various different techniques. For example, data, an instruction, a command, information, a signal, a bit, a symbol, a chip, and the like that can be mentioned throughout the above description may be represented by a voltage, a current, an electromagnetic wave, a magnetic field or a magnetic particle, or a photo field or a photon, or any combination thereof.

Note that the terms described in the present disclosure and terms necessary for understanding the present disclosure may be replaced with terms having identical or similar meanings. For example, at least one of the channel and the symbol may be a signal (signaling). In addition, the signal may be a message. In addition, a component carrier (CC) may be referred to as a carrier frequency, a cell, a frequency carrier, or the like.

The terms "system" and "network" used in the present disclosure are used interchangeably.

In addition, information, parameters, and the like described in the present disclosure may be expressed by using an absolute value, may be expressed by using a relative value from a predetermined value, or may be expressed by using other corresponding information. For example, radio resources may be indicated by an index.

The names used for the parameters described above are not restrictive names in any respect. Further, mathematical expressions and the like using these parameters may be different from those explicitly disclosed in the present disclosure. Since various channels (for example, PUCCH, PDCCH, and the like) and information elements can be identified by any suitable names, various names allocated to these various channels and information elements are not restrictive in any way.

In the present disclosure, terms such as "base station (BS), "radio base station", "fixed station", "NodeB", "eNodeB (eNB)", "gNodeB (gNB), "access point", "transmission point", "reception point", "transmission/reception point", "cell", "sector", "cell group", "carrier", "component carrier", and the like can be used interchangeably. The base station may also be referred to as a term such as a macrocell, a small cell, a femtocell, a picocell, or the like.

The base station can accommodate one or a plurality of (for example, three) cells. In a case where the base station accommodates a plurality of cells, the entire coverage area of the base station can be divided into a plurality of smaller areas, each smaller area can also provide communication service by using a base station subsystem (for example, a small base station (RRH: Remote Radio Head) for indoor use). The term "cell" or "sector" indicates part or the entirety of the coverage area of at least one of the base station and the base station subsystem that performs communication service in this coverage.

In the present disclosure, the terms "mobile station (MS)", "user terminal", "user equipment (UE)", "terminal" and the like can be used interchangeably.

The mobile station may be referred to by those skilled in the art as a subscriber station, a mobile unit, a subscriber unit, a wireless unit, a remote unit, a mobile device, a wireless service, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission device, a reception device, a communication device, or the like. Note that least one of the base station and the mobile station may be a device mounted on a mobile body, a mobile body itself, or the like. The mobile body may be a vehicle (for example, a car, an airplane, or the like), a mobile body that moves in an unmanned manner (for example, a drone, a self-driving car, or the like), or a robot (manned type or an unmanned type). Note that at least one of the base station and the mobile station includes also a device which does not necessarily move during communication operation. For example, at least one of the base station and the mobile station may be an IoT (Internet of Things) device such as a sensor.

In addition, the base station in the present disclosure may be replaced with a user terminal. For example, each aspect/embodiment of the present disclosure may be applied to a configuration in which communication between a base station and a user terminal is replaced with communication between a plurality of user terminals (for example, may be referred to as D2D (Device-to-Device), V2X (Vehicle-to-Everything), or the like). In this case, a configuration may be adopted in which the UE 10 has the function that the RAN 20 described above has. In addition, expressions such as "uplink" and "downlink" may also be replaced with an expression corresponding to inter-terminal communication (for example, "side"). For example, an uplink channel, a downlink channel, or the like may be replaced with a side channel.

Similarly, the user terminal in the present disclosure may be replaced with a base station. In this case, a configuration may be adopted in which the RAN 20 has the function that the UE10 described above has.

The terms "connected" and "coupled" or every transformation of these terms mean every direct or indirect connection or coupling between two or more elements, and may include a case where there are one or more intermediate elements between two elements that are "connected" or "coupled" to each other. Coupling or connection between elements may be a physical coupling or connection, logical coupling or connection, or a combination thereof. For example, "connecting" may be replaced with "accessing". In a case of being used in the present disclosure, it can be considered that two elements are "connected" or "coupled" to each other by using at least one of one or more electric wires, cables, and printed electric connections, and as several non-definitive and non-comprehensive examples, by using electromagnetic energy having a wavelength of a radio frequency region, a microwave region, and an optical (both visible and invisible) region.

The phrase "based on" used in the present disclosure does not mean "based only on" unless otherwise stated. In other words, the phrase "based on" means both "based only on" and "based at least on".

Any reference to elements for which the designation "first", "second", and the like are used and which are used in the present disclosure generally does not limit the amount or order of those elements. These designations can be used in the present disclosure as a convenient way to distinguish between two or more elements. Thus, reference to the first and second elements does not mean that only two elements may be employed, or that in some way the first element must precede the second element.

In a case where "include", "including", and transformation of them are used in the present disclosure, those terms are intended to be comprehensive like the term "comprising". In addition, the term "or" used in the present disclosure is not intended to be exclusive OR.

In the present disclosure, in a case where an article such as "a", "an", and "the" like in English is added by translation, the present disclosure may include a case where the noun following the article is plural.

### Reference Signs List

- 1: Communication system
- 10: UE (Terminal)
- 20: RAN (Base station node)
- 20A: S-RAN (First base station node)
- 20B: T-RAN (Second base station node)
- 21: Additional information storage unit
- 22: Detection unit
- 23: Notification unit
- 24: Notification unit
- 40: SMF (Session control node)
- 41: Table information storage unit
- 42: Additional information notification unit
- 43: Session release unit
- 80: LADN

## Claims

1. A communication system comprising:
a base station node (20) configured to be connected to a terminal by radio communication; and a session control node configured to perform session control of the terminal,
the session control node including:
a table information storage unit (41) configured to store table information in which a specific area included in a communication area of the base station node and a local area data network, LADN, whose service provision range is the specific area are associated with each other; and
an additional information notification unit (42) configured to notify, in a case of receiving a session establishment request to the LADN associated with the specific area in the table information from the terminal located in the specific area, a first base station node connected to the terminal of additional information indicating that the specific area is the service provision range of the LADN, and
wherein the first base station node includes an additional information storage unit (21) configured to store the additional information given in notification from the additional information notification unit, and
wherein the additional information includes session identification information for identifying a session between the terminal and the LADN.

2. The communication system according to claim 1, wherein the specific area is a communication area of the base station node or an area corresponding to a portion of a plurality of cells accommodated in the base station node.

3. The communication system according to claim 1 or 2,
wherein the specific area is a first communication area of the first base station node,
wherein the first base station node further includes:
a detection unit configured to detect that the terminal associated with the additional information stored in the additional information storage unit has moved from the first communication area to a second communication area of a second base station node; and
a notification unit configured to notify the session control node of first notification information giving an instruction to release a session between the terminal and the LADN, in a case where the detection unit detects movement of the terminal, and
wherein the session control node further includes a session release unit configured to release a session between the terminal and the LADN in response to reception of the first notification information.

4. The communication system according to claim 1 or 2,
wherein the specific area is a first communication area of the first base station node,
wherein the first base station node further includes:
a detection unit configured to detect that the terminal associated with the additional information stored in the additional information storage unit has moved from the first communication area to a second communication area of a second base station node; and
a notification unit configured to notify the second base station node of second notification information indicating that a session between the terminal and the LADN is available only in the first communication area, in a case where the detection unit detects movement of the terminal,
wherein the second base station node includes a notification unit configured to reject a session between the terminal and the LADN and to notify the session control node of third notification information indicating rejection of the session between the terminal and the LADN, in response to reception of the second notification information, and
wherein the session control node further includes a session release unit configured to release the session between the terminal and the LADN, in response to reception of the third notification information.

5. The communication system according to claim 1 or 2,
wherein the specific area is an area corresponding to a portion of a plurality of cells accommodated in the first base station node,
wherein the first base station node further includes:
a detection unit configured to detect that the terminal associated with the additional information stored in the additional information storage unit has moved from the portion of the plurality of cells to another cell; and
a notification unit configured to notify the session control node of fourth notification information giving an instruction to release a session between the terminal and the LADN, in a case where the detection unit detects movement of the terminal, and
wherein the session control node further includes a session release unit configured to release the session between the terminal and the LADN in response to reception of the fourth notification information.

6. The communication system according to claim 5,
wherein the notification unit of the first base station node rejects a session between the terminal and the LADN and notifies the session control node of the fourth notification information.

7. A communication control method performed by a communication system including a base station node configured to be connected to a terminal by radio communication, and a session control node configured to perform session control of the terminal, the method comprising:
a step (S501) of storing, by the session control node, table information in which a specific area included in a communication area of the base station node and a local area data network, LADN, whose service provision range is the specific area are associated with each other;
a step (S502) of notifying a first base station node connected to the terminal of additional information indicating that the specific area is a service provision range of the LADN, in a case where the session control node receives a session establishment request to the LADN associated with the specific area in the table information from the terminal located in the specific area; and
a step (S503) of storing, in the first base station node, the additional information given in notification from the session control node, and
wherein the additional information includes session identification information for identifying a session between the terminal and the LADN.

## Patentansprüche

1. Kommunikationssystem, umfassend:
einen Basisstationsknoten (20), der so konfiguriert ist, dass er durch Funkkommunikation mit einem Endgerät verbunden werden kann; und einen Sitzungssteuerungsknoten, der so konfiguriert ist, dass er die Sitzungssteuerung des Endgeräts durchführt,
wobei der Sitzungssteuerungsknoten einschließt:
eine Tabelleninformationsspeichereinheit (41)
die so konfiguriert ist, dass sie Tabelleninformationen speichert, in denen ein spezifischer Bereich, der in einem Kommunikationsbereich des Basisstationsknotens eingeschlossen ist, und ein lokales Datennetzwerk, LADN, dessen Dienstbereitstellungsbereich der spezifische Bereich ist, einander zugeordnet sind; und
eine Zusatzinformationsbenachrichtigungseinheit (42)
die so konfiguriert ist, dass sie in einem Fall des Empfangens einer Sitzungsaufbauanfrage an das LADN, das dem spezifischen Bereich in den Tabelleninformationen zugeordnet ist, von dem Endgerät, das sich in dem spezifischen Bereich befindet, einen ersten Basisstationsknoten, der mit dem Endgerät verbunden ist, über Zusatzinformationen benachrichtigt, die anzeigen, dass der spezifische Bereich der Dienstbereitstellungsbereich des LADN ist, und
wobei der erste Basisstationsknoten eine Zusatzinformationsspeichereinheit (21) einschließt, die so konfiguriert ist, dass sie die Zusatzinformationen speichert, die in der Benachrichtigung von der Zusatzinformationsbenachrichtigungseinheit gegeben werden, und
wobei die Zusatzinformationen Sitzungsidentifikationsinformationen zum Identifizieren einer Sitzung zwischen dem Endgerät und dem LADN einschließen.

2. Kommunikationssystem nach Anspruch 1,
wobei der spezifische Bereich ein Kommunikationsbereich des Basisstationsknotens oder ein Bereich ist, der einem Teil einer Vielzahl von Zellen entspricht, die in dem Basisstationsknoten untergebracht sind.

3. Kommunikationssystem nach Anspruch 1 oder 2,
wobei der spezifische Bereich ein erster Kommunikationsbereich des ersten Basisstationsknotens ist,
wobei der erste Basisstationsknoten weiter einschließt:
eine Detektionseinheit, die so konfiguriert ist, dass sie detektiert, dass sich das Endgerät, das den in der Zusatzinformationsspeichereinheit gespeicherten Zusatzinformationen zugeordnet ist, von dem ersten Kommunikationsbereich zu einem zweiten Kommunikationsbereich eines zweiten Basisstationsknotens bewegt hat; und
eine Benachrichtigungseinheit, die so konfiguriert ist, dass sie den Sitzungssteuerungsknoten über erste Benachrichtigungsinformationen benachrichtigt, die eine Anweisung zur Freigabe einer Sitzung zwischen dem Endgerät und dem LADN geben, in einem Fall, in dem die Detektionseinheit eine Bewegung des Endgeräts detektiert, und
wobei der Sitzungssteuerungsknoten weiter eine Sitzungsfreigabeeinheit einschließt die so konfiguriert ist, dass sie eine Sitzung zwischen dem Endgerät und dem LADN als Reaktion auf den Empfang der ersten Benachrichtigungsinformationen freigibt.

4. Kommunikationssystem nach Anspruch 1 oder 2,
wobei der spezifische Bereich ein erster Kommunikationsbereich des ersten Basisstationsknotens ist,
wobei der erste Basisstationsknoten weiter einschließt:
eine Detektionseinheit, die so konfiguriert ist, dass sie detektiert, dass sich das Endgerät, das den in der Zusatzinformationsspeichereinheit gespeicherten Zusatzinformationen zugeordnet ist, von dem ersten Kommunikationsbereich zu einem zweiten Kommunikationsbereich eines zweiten Basisstationsknotens bewegt hat; und
eine Benachrichtigungseinheit, die so konfiguriert ist, dass sie den zweiten Basisstationsknoten über zweite Benachrichtigungsinformationen benachrichtigt die anzeigen, dass eine Sitzung zwischen dem Endgerät und dem LADN nur in dem ersten Kommunikationsbereich verfügbar ist,
in einem Fall, in dem die Detektionseinheit eine Bewegung des Endgeräts detektiert,
wobei der zweite Basisstationsknoten eine Benachrichtigungseinheit einschließt, die so konfiguriert ist, dass sie eine Sitzung zwischen dem Endgerät und dem LADN ablehnt und den Sitzungssteuerungsknoten als Reaktion auf den Empfang der zweiten Benachrichtigungsinformation über dritte Benachrichtigungsinformationen benachrichtigt, die die Ablehnung der Sitzung zwischen dem Endgerät und dem LADN anzeigen, und
wobei der Sitzungssteuerungsknoten weiter eine Sitzungsfreigabeeinheit einschließt, die so konfiguriert ist, dass sie die Sitzung zwischen dem Endgerät und dem LADN als Reaktion auf den Empfang der dritten Benachrichtigungsinformationen freigibt.

5. Kommunikationssystem nach Anspruch 1 oder 2,
wobei der spezifische Bereich ein Bereich ist, der einem Teil einer Vielzahl von Zellen entspricht, die in dem ersten Basisstationsknoten untergebracht sind,
wobei der erste Basisstationsknoten weiter einschließt:
eine Detektionseinheit, die so konfiguriert ist, dass sie detektiert, dass das Endgerät, das den in der Zusatzinformationsspeichereinheit gespeicherten Zusatzinformationen zugeordnet ist, sich von dem Teil der Vielzahl von Zellen zu einer anderen Zelle bewegt hat; und
eine Benachrichtigungseinheit, die so konfiguriert ist, dass sie den Sitzungssteuerungsknoten über vierte Benachrichtigungsinformationen benachrichtigt, die eine Anweisung zur Freigabe einer Sitzung zwischen dem Endgerät und dem LADN geben, in einem Fall, in dem die Detektionseinheit eine Bewegung des Endgeräts detektiert, und
wobei der Sitzungssteuerungsknoten weiter eine Sitzungsfreigabeeinheit einschließt, die so konfiguriert ist, dass sie die Sitzung zwischen dem Endgerät und dem LADN als Reaktion auf den Empfang der vierten Benachrichtigungsinformationen freigibt.

6. Kommunikationssystem nach Anspruch 5,
wobei die Benachrichtigungseinheit des ersten Basisstationsknotens eine Sitzung zwischen dem Endgerät und dem LADN ablehnt und den Sitzungssteuerungsknoten über die vierten Benachrichtigungsinformationen benachrichtigt.

7. Kommunikationssteuerungsverfahren, das von einem Kommunikationssystem durchgeführt wird, das einen Basisstationsknoten einschließt, der so konfiguriert ist, dass er mit einem Endgerät durch Funkkommunikation verbunden werden kann, und einen Sitzungssteuerungsknoten, der so konfiguriert ist, dass er eine Sitzungssteuerung des Endgeräts durchführt, wobei das Verfahren umfasst:
einen Schritt (S501) des Speicherns, durch den Sitzungssteuerungsknoten, von Tabelleninformationen, in denen ein spezifischer Bereich, der in einem Kommunikationsbereich des Basisstationsknotens eingeschlossen ist, und ein lokales Datennetzwerk, LADN, dessen Dienstbereitstellungsbereich der spezifische Bereich ist, einander zugeordnet sind;
einen Schritt (S502) des Benachrichtigens eines ersten Basisstationsknotens, der mit dem Endgerät verbunden ist, über Zusatzinformationen, die anzeigen, dass der spezifische Bereich ein Dienstbereitstellungsbereich des LADN ist, in einem Fall, in dem der Sitzungssteuerungsknoten eine Sitzungsaufbauanfrage an das LADN, das dem spezifischen Bereich in den Tabelleninformationen zugeordnet ist, von dem Endgerät empfängt, das sich in dem spezifischen Bereich befindet; und
einen Schritt (S503) des Speicherns, in dem ersten Basisstationsknoten, der Zusatzinformationen, die in der Benachrichtigung von dem Sitzungssteuerungsknoten gegeben sind, und
wobei die Zusatzinformationen Sitzungsidentifikationsinformationen zum Identifizieren einer Sitzung zwischen dem Endgerät und dem LADN einschließen.

## Revendications

1. Système de communication comprenant :
un noeud (20) de station de base configuré pour être connecté à un terminal par communication radio ; et un noeud de commande de session configuré pour effectuer une commande de session du terminal,
le noeud de commande de session incluant :
une unité (41) de stockage d'informations de table configurée pour stocker des informations de table dans lesquelles une zone spécifique incluse dans une zone de communication du noeud de station de base et un réseau de données local, LADN, dont la plage de fourniture de services est la zone spécifique sont associés l'un à l'autre ; et
une unité (42) de notification d'informations supplémentaires configurée pour notifier, en cas de réception d'une demande d'établissement de session au LADN associé à la zone spécifique dans les informations de table provenant du terminal situé dans la zone spécifique, à un premier noeud de station de base connecté au terminal des informations supplémentaires indiquant que la zone spécifique est la plage de fourniture de services du LADN, et
dans lequel le premier noeud de station de base inclut une unité (21) de stockage d'informations supplémentaires configurée pour stocker les informations supplémentaires données dans la notification provenant de l'unité de notification d'informations supplémentaires, et
dans lequel les informations supplémentaires incluent des informations d'identification de session pour identifier une session entre le terminal et le LADN.

2. Système de communication selon la revendication 1, dans lequel la zone spécifique est une zone de communication du noeud de station de base ou une zone correspondant à une partie d'une pluralité de cellules logées dans le noeud de station de base.

3. Système de communication selon la revendication 1 ou la revendication 2,
dans lequel la zone spécifique est une première zone de communication du premier noeud de station de base,
dans lequel le premier noeud de station de base inclut en outre :
une unité de détection configurée pour détecter que le terminal associé aux informations supplémentaires stockées dans l'unité de stockage d'informations supplémentaires s'est déplacé de la première zone de communication vers une deuxième zone de communication d'un deuxième noeud de station de base ; et
une unité de notification configurée pour notifier au noeud de commande de session des premières informations de notification donnant une instruction pour libérer une session entre le terminal et le LADN, dans un cas où l'unité de détection détecte un déplacement du terminal, et
dans lequel le noeud de commande de session inclut en outre une unité de libération de session configurée pour libérer une session entre le terminal et le LADN en réponse à une réception des premières informations de notification.

4. Système de communication selon la revendication 1 ou la revendication 2,
dans lequel la zone spécifique est une première zone de communication du premier noeud de station de base, dans lequel le premier noeud de station de base inclut en outre :
une unité de détection configurée pour détecter que le terminal associé aux informations supplémentaires stockées dans l'unité de stockage d'informations supplémentaires s'est déplacé de la première zone de communication vers une deuxième zone de communication d'un deuxième noeud de station de base ; et
une unité de notification configurée pour notifier au deuxième noeud de station de base des deuxièmes informations de notification indiquant qu'une session entre le terminal et le LADN est disponible uniquement dans la première zone de communication, dans un cas où l'unité de détection détecte un déplacement du terminal,
dans lequel le deuxième noeud de station de base inclut une unité de notification configurée pour rejeter une session entre le terminal et le LADN et pour notifier au noeud de commande de session des troisièmes informations de notification indiquant un rejet de la session entre le terminal et le LADN, en réponse à une réception des deuxièmes informations de notification, et
dans lequel le noeud de commande de session inclut en outre une unité de libération de session configurée pour libérer la session entre le terminal et le LADN, en réponse à une réception des troisièmes informations de notification.

5. Système de communication selon la revendication 1 ou la revendication 2,
dans lequel la zone spécifique est une zone correspondant à une partie d'une pluralité de cellules logées dans le premier noeud de station de base,
dans lequel le premier noeud de station de base inclut en outre :
une unité de détection configurée pour détecter que le terminal associé aux informations supplémentaires stockées dans l'unité de stockage d'informations supplémentaires s'est déplacé de la partie de la pluralité de cellules vers une autre cellule ; et
une unité de notification configurée pour notifier au noeud de commande de session des quatrièmes informations de notification donnant une instruction pour libérer une session entre le terminal et le LADN, dans un cas où l'unité de détection détecte un déplacement du terminal, et
dans lequel le noeud de commande de session inclut en outre une unité de libération de session configurée pour libérer la session entre le terminal et le LADN en réponse à la réception des quatrièmes informations de notification.

6. Système de communication selon la revendication 5,
dans lequel l'unité de notification du premier noeud de station de base rejette une session entre le terminal et le LADN et notifie au noeud de commande de session les quatrièmes informations de notification.

7. Procédé de commande de communication mis en oeuvre par un système de communication incluant un noeud de station de base configuré pour être connecté à un terminal par communication radio, et un noeud de commande de session configuré pour effectuer une commande de session du terminal, le procédé comprenant :
une étape (S501) de stockage, par le noeud de commande de session, d'informations de table dans lesquelles une zone spécifique incluse dans une zone de communication du noeud de station de base et un réseau de données local, LADN, dont une plage de fourniture de services est la zone spécifique sont associés l'un à l'autre ;
une étape (S502) de notification à un premier noeud de station de base connecté au terminal d'informations supplémentaires indiquant que la zone spécifique est une plage de fourniture de services du LADN, dans un cas où le noeud de commande de session reçoit une demande d'établissement de session au LADN associé à la zone spécifique dans les informations de table provenant du terminal situé dans la zone spécifique ; et
une étape (S503) de stockage, dans le premier noeud de station de base, des informations supplémentaires données dans la notification provenant du noeud de commande de session, et
dans lequel les informations supplémentaires incluent des informations d'identification de session pour identifier une session entre le terminal et le LADN.
